# EUROPÄISCHE PATENTANMELDUNG

(11) **EP 4 703 962 A1**
(43) Veröffentlichungstag der Anmeldung: **04.03.2026**
(21) Anmeldenummer: 24197408.8
(22) Anmeldetag: 29.08.2024
(51) Int. Cl.: G06F 40/30, G06N 3/0455, G06N 3/0475, G06N 5/02

(54) **VERFAHREN UND VORRICHTUNG ZUR REGELBASIERTEN INTEGRATION EINES LARGE LANGUAGE MODELS**

(71) Anmelder: Rulemapping Group GmbH, 10117 Berlin (DE)
(72) Erfinder: Breidenbach, Stephan, 14129 Berlin (DE); Wend, Tilo, 12165 Berlin (DE)
(74) Vertreter: 2K Patentanwälte Blasberg Kewitz & Reichel

(57) **Zusammenfassung**

Verfahren zur regelbasierten Integration eines Large Language Models, LLM, mit umfassenden Regelbäumen, Rulemaps, dessen innere Knoten logische Verknüpfungen darstellen und an dessen Blätter Prompts zur Übergabe an das LLM hinterlegt sind, wobei die Prompts jeweils zusammengesetzt sind aus einem System-Prompt und einem oder mehreren User-Prompts, wobei User-Prompts einen spezifischen Sachverhalt und eine Query Definition umfassen, die die Form des Ergebnisses bestimmen und im Regelbaum im nächsten inneren Knoten zu dem Prompt in der logischen Verknüpfung verwendet werden,
wobei der System-Prompt den Kontext aus global vorgegebenen Einstellungen und Informationen festlegt, die für die spezfische Rulemap vorgegeben sind,
wobei die so erzeugen Prompts - sequenziell - dem LLM übergeben werden, um eine logische Antwort zu erzeugen, die geeignet ist in dem Regelbaum ausgewertet zu werden, wobei der Regelbaum durchlaufen wird von den Blättern zur Wurzel, um ein logisches Endergebnis zu erzeugen.

## Beschreibung

Regelbasierte Künstliche Intelligenzen, "Rule-based AI" ist ein technisches Verfahren zur maschinellen und automatisierten Prüfung, ob in einem konkreten Fall alle von der zugrundeliegenden Regel vorgegebenen Voraussetzungen vorhanden sind oder nicht.

### Gebiet der Erfindung:

Bisher werden für maschinelle regelbasierte Prüfungen regelbasierte Systeme benutzt. Auch mit generativer künstlicher Intelligenz (KI) in Form eines Large Language Model (LLM) wird versucht, regelbasierte Entscheidungen zu unterstützen. Es gibt jedoch bisher kein technisches Verfahren, das diese zwei Methoden kombiniert. Mögliche LLM sind, ohne dass es eine Beschränkung gibt, ChatGPT 4, MS Azure, Mistral, Aleph Alpha und LLama, die auch von der Erfindung genutzt werden.

Ein LLM allein kann eine regelbasierte Prüfung nicht sicher und belastbar durchführen. Bei der Anwendung eines LLM für die Prüfung regelbasierter Kontexte besteht die Gefahr, dass es halluziniert(S. zB Halluzinieren der KI bei der rechtlichen Prüfung: Affidavit of Steven Schwartz in Sachen Mata v. Avianca, Inc., 1:22-cv-01461, (S.D.N.Y. May 25, 2023) ECF No. 32, District Court, S.D. New York, https://www.courtlistener.com/docket/63107798/32/1/mata-v-avianca-inc/.) und sich Inhalte selbst ausdenkt. Die Anwender haben keine Kontrolle darüber, wie sich das LLM verhält und nach welchen Regeln es entscheidet, um zum Ergebnis der Prüfung zu kommen.

Regelbasierte Systeme können keine selbständigen Bewertungen durchführen. Alle Merkmale und Voraussetzungen, die einer Bewertung bedürfen, sind entweder datengetrieben oder müssen manuell geprüft werden, was einen großen Zeitaufwand bedeutet und eine Vollautomatisierung regelbasierter Entscheidungsunterstützung überall dort ausschließt, wo eine vollständige datengetriebene Entscheidung mangels Daten nicht getroffen werden kann.

### Überblick über die Erfindung:

Durch das in der Rule-based AI vorgesehene technische Verfahren gemäß den Ansprüchen werden diese zwei Technologien, kombiniert. Entlang eines Regelbaums (der Rulemap) findet eine regelbasierte Prüfung mit gleichzeitiger Anwendung eines auf semantischer Korrelation basierenden LLMs mit künstlicher Intelligenz statt.

Was für eine regelbasierte Prüfung das "Ergebnis", also die Fallfrage ist und welche Merkmale und Voraussetzungen für deren Prüfung bzw. Beantwortung aufgrund der begründenden Regel notwendig sind, wird in der Rulemap der Rule-based AI definiert. Eine Rulemap ist grundsätzlich abstrakt für eine Vielzahl von Fällen, also eine Prüfungsmatrize. Eine Rulemap kann anwendungsspezifisch einmalig festgelegt werden, um dann vielfach automatisiert genutzt zu werden.

Anwendungsgebiete sind alle regelbasierten Systeme. Neben klassischen regelbasierten Kontexten, wie Recht und Verwaltung, sind das z.B. Ablaufregeln, Prozessregeln, maschinelle Automatisierungen die regelbasiert sind, medizinische Regeln (Leitlinien), Bedienungsregeln, technische Normen, ohne dass diese Aufzählung abschließend ist.

An jedem Endknoten (Blatt) der Rulemap lassen sich sog. Anfrage Definitionen/Query Definitions hinterlegen, die bei der konkreten Abarbeitung mit dem LLM kommunizieren.

Bei der Erfindung wird eine regelbasierte Prüfung anhand der in der (visuell darstellbaren) Rulemap definierten Regelarchitektur automatisiert vorgenommen (Kausal-Verhältnis), unter Nutzung der nur korrelativ definierten LLMs.

Anhand dieses technischen Verfahrens von Rule-based AI werden die einzelnen Merkmale getrennt und unabhängig voneinander geprüft. Die Abfragen in den Endknoten/Blättern werden an das LLM durch automatisch generierte Prompts übergeben. Die LLM-Prüfung folgt getrennt für jedes Merkmal. So wird die KI technisch "gezwungen", der Regelarchitektur zu folgen und eine Bewertung regelbasiert vorzunehmen. Der Anwender hat dabei die vollständige Kontrolle darüber, welche Regeln er der KI zur Verfügung stellt und kann diese bei Bedarf anpassen.

Ein weiterer Teil der Erfindung ist eine Vorrichtung die entsprechende Berechnung vornimmt, um das Verfahren durchzuführen. Hier sind insbesondere parallele KI-Systeme zu nennen von z.B. Nvidia oder anderen Herstellern.

### Figurenbeschreibung:

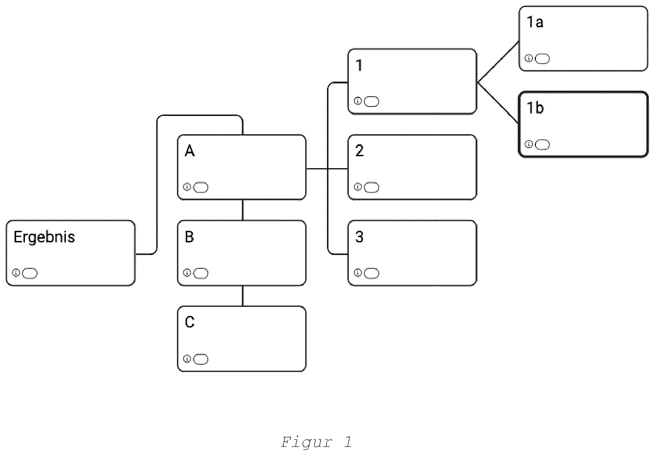

Im Folgenden werden die Figuren kurz beschrieben
Figur 1 zeigt eine einfache Rulemap mit den drei logischen Grundoperatoren. Der Startknoten repräsentiert das Ergebnis. Dieses liegt vor, wenn A, B UND C gegeben sind. A liegt vor, wenn 1 ODER 2 ODER 3 (oder mehrere davon) gegeben sind. 1 liegt vor, wenn entweder 1a XOR 1b gegeben sind.

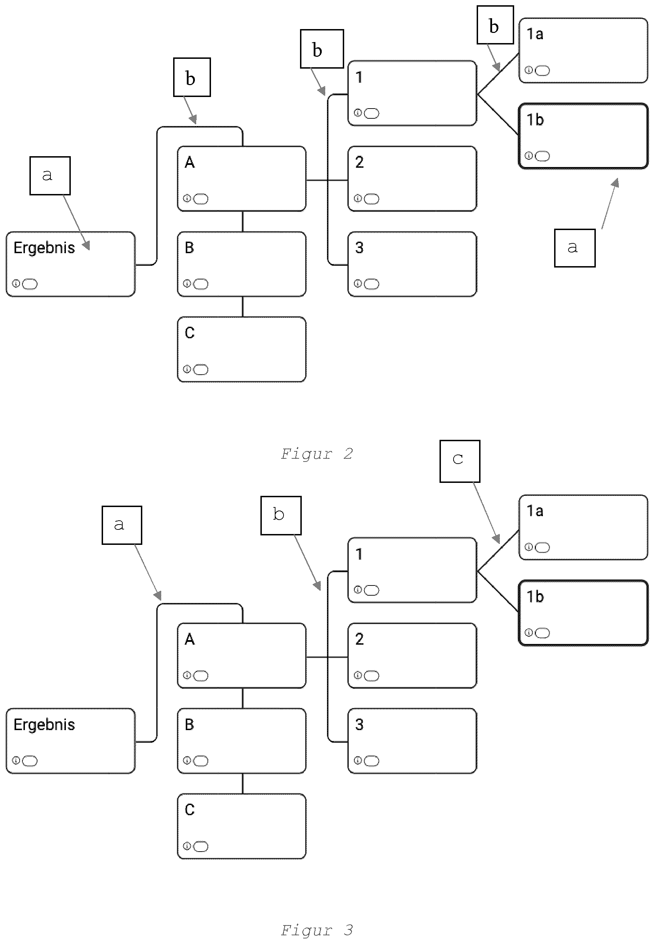

Figur 2 beschreibt die einzelnen Elemente der Rulemap. a) ist der Knotentitel, b) symbolisiert die logischen Operatoren
Figur 3 beschreibt die logischen Verknüpfungen/Operatoren. a) beschreibt die UND-Verknüpfung, b) die ODER-Verknüpfung (nicht ausschließendes Oder), c) die XOR-Verknüpfung (ausschließendes oder exklusives Oder).

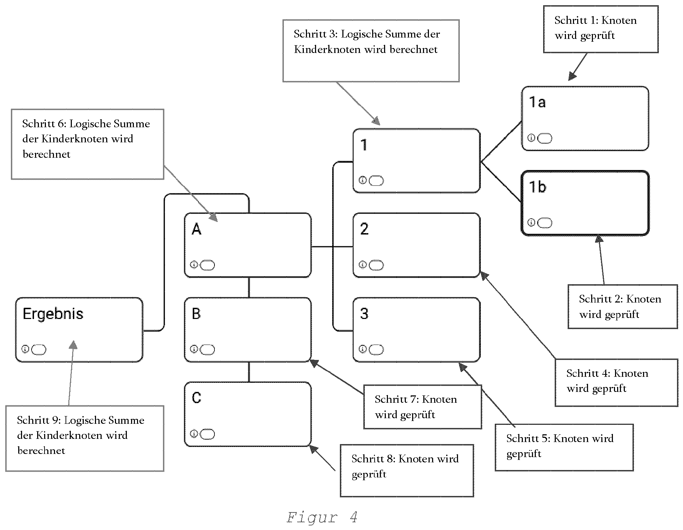

Figur 4 beschreibt die Prüfungsfolge innerhalb der Rulemap.
Figur 5 beschreibt, wie an einem Endknoten eine Definition hinterlegt ist, die in den automatischen Prompt einfließt.

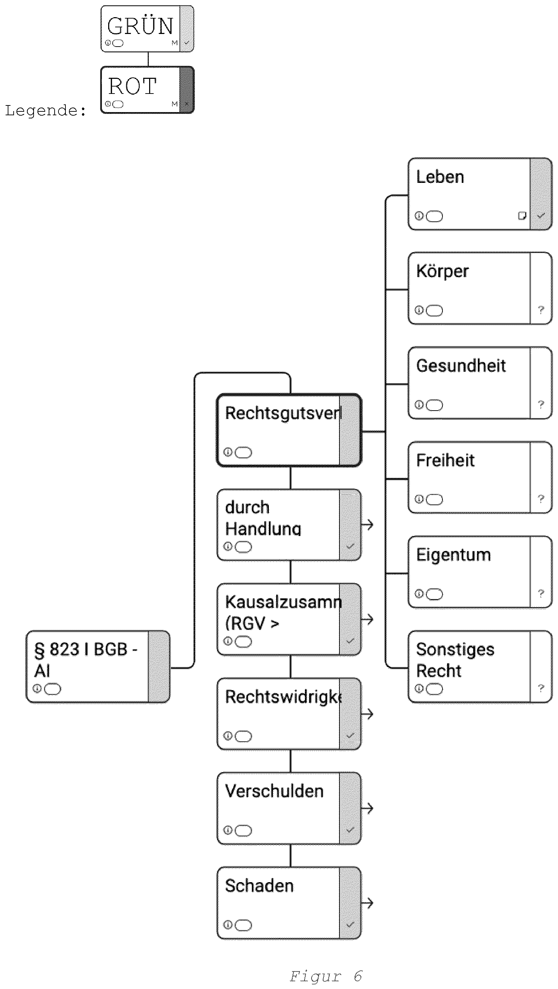

Figur 6 beschreibt, wie das automatische Prüfungsergebnis (hier "ja") farblich (true / grün) visualisiert wird.

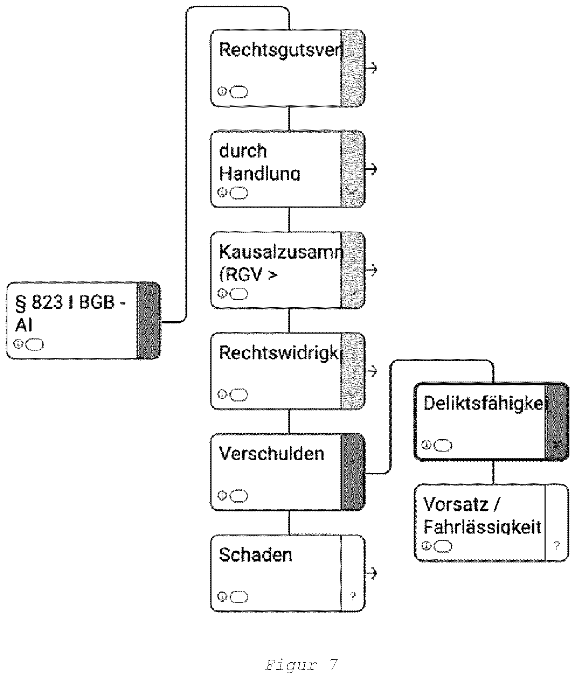

Figur 7 beschreibt, wie das automatische Prüfungsergebnis (hier "nein") farblich (false / rot) visualisiert wird.

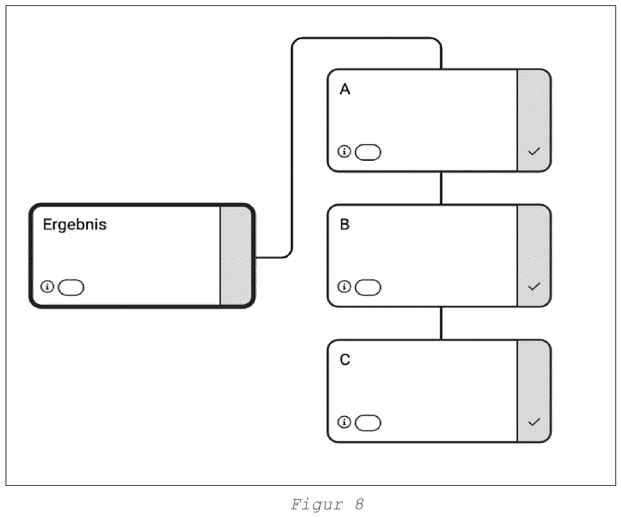

Figur 8 beschreibt, wie die logische Summe der drei in einer UND-Verknüpfung verknüpften Kinderknoten a, b und c, die allesamt gegeben sind, das Ergebnis definieren (gegeben, grün).

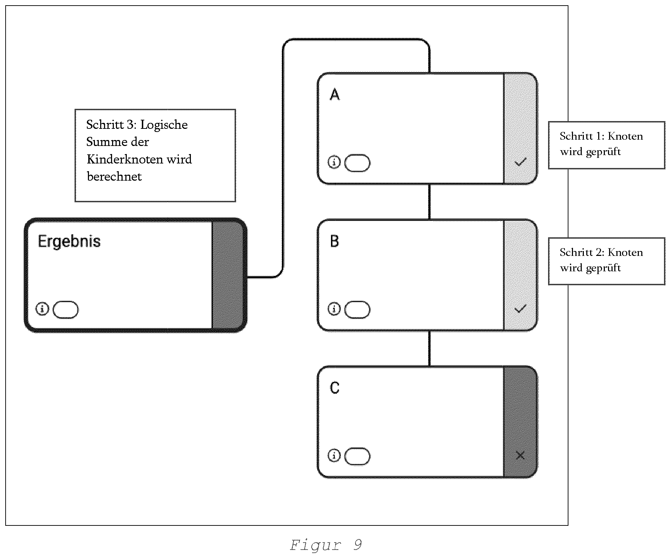

Figur 9 beschreibt, wie die logische Summe der drei in einer UND-Verknüpfung verknüpften Kinderknoten, von denen c) nicht gegeben (false / rot) ist, das Ergebnis definiert (nicht gegeben, rot).

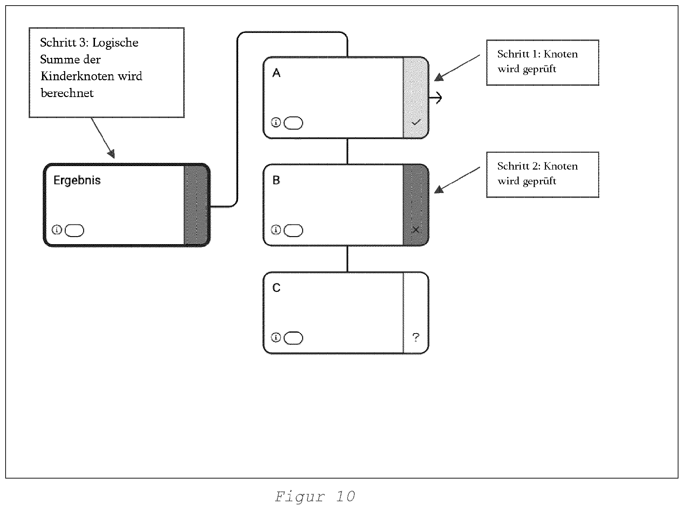

Figur 10 beschreibt, die Abfolge der automatischen Prüfung und Ergebnisrepräsentation in einer UND-Verknüpfung. Entlang der Rulemap wird der erste Endknoten des ersten Pfads (hier A) geprüft. Wenn dieser gegeben ist (true / grün), geht die Prüfung mit dem nächsten Endknoten des Pfads weiter, (hier B). Da dieser nicht gegeben ist (false / rot), ergibt sich aus der logischen Summe bereits das Ergebnis "nicht gegeben" (false / rot) und die Prüfung ist beendet. Knoten C muss nicht mehr geprüft werden.

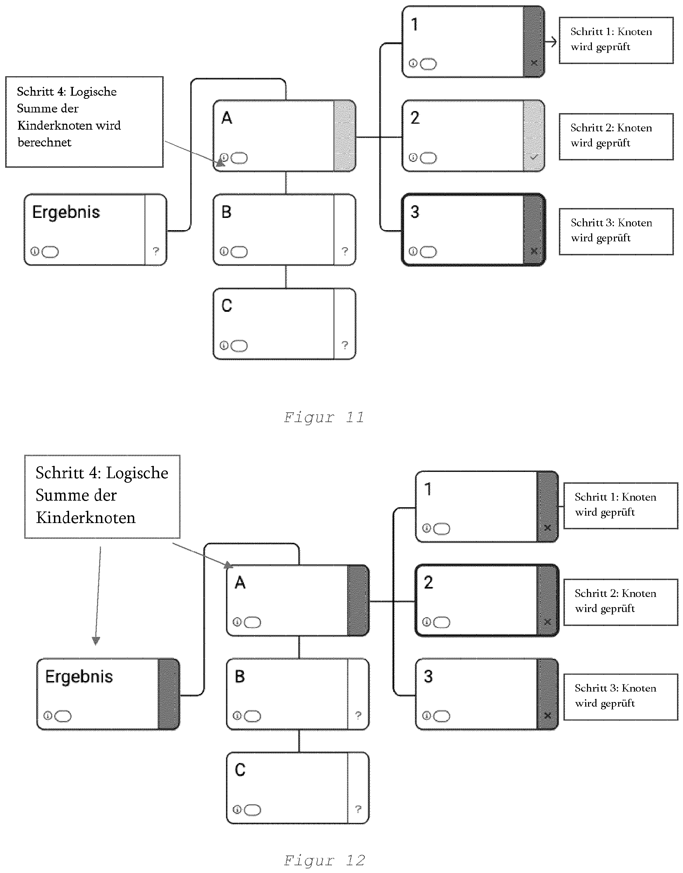

Figur 11 beschreibt, die Ergebnisrepräsentation in einer ODER-Verknüpfung mit positivem Ergebnis. Knoten 1 ist "nicht gegeben" (false / rot), Knoten 2 ist "gegeben" (true / grün), Knoten 3 ist "nicht gegeben" (false / rot). In der ODER-Verknüpfung genügt ein positives logisches Ergebnis, damit der Mutterknoten (A) gegeben ist.
Figur 12 beschreibt, die Ergebnisrepräsentation in einer ODER-Verknüpfung und einer UND-Verknüpfung mit negativem Ergebnis. Knoten 1, 2 und 3 sind "nicht gegeben" (false / rot), weswegen Knoten A in der logischen Summe "nicht gegeben" (false / rot) ist. Weil A in einer UND-Verknüpfung mit seinem Mutterknoten ("Ergebnis") verknüpft ist, ergibt sich auch hier bereits die logische Summe als "nicht gegeben" (false / rot).

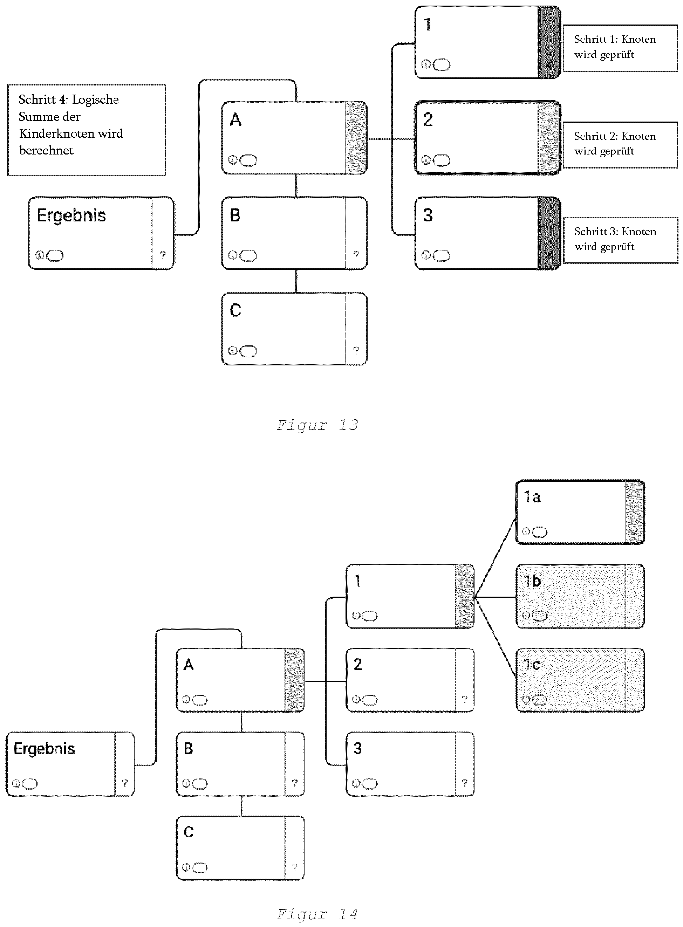

Figur 13 beschreibt, die Abfolge der automatischen Prüfung und Ergebnisrepräsentation in einer ODER-Verknüpfung mit positivem Ergebnis. Entlang der Rulemap wird der erste Endknoten des ersten Pfads (hier 1) geprüft. Dieser ist nicht gegeben (false / rot), die Prüfung wird mit dem nächsten Endknoten des Pfads fortgesetzt (hier 2). Da dieser gegeben ist (true / grün), ergibt sich aus der logischen Summe bereits das Ergebnis des Mutterknotens (A) als "gegeben" (true / grün). Dennoch geht dir Prüfung weiter mit 3, weil auch dieser gegeben sein könnte (nicht ausschließendes Oder).
Figur 14 beschreibt das logische Verhalten in der XOR-Verknüpfung mit positivem Ergebnis (true / grün). Da 1a "gegeben" ist (true / grün), ist auch 1 "gegeben" (true / grün). 1b und 1c werden nicht mehr geprüft (grau), weil exklusiv mit 1a verknüpft. Weil 1 in einer ODER-Verknüpfung mit seinem Mutterknoten A verknüpft ist, ergibt sich auch hier bereits die logische Summe als "gegeben" (true / grün).

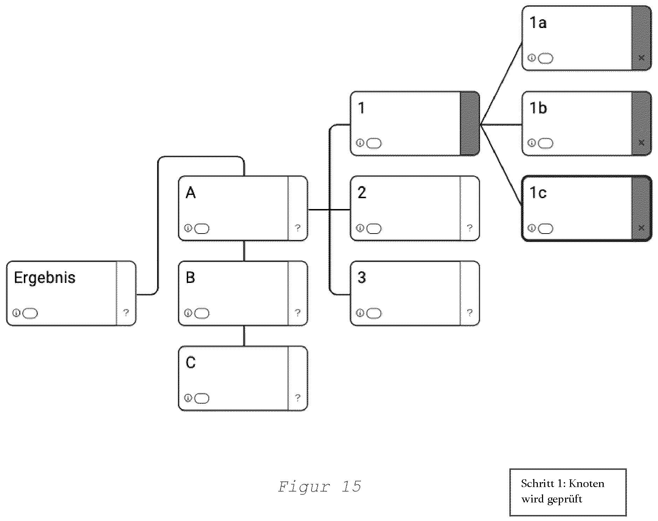

Figur 15 beschreibt das logische Verhalten in der XOR-Verknüpfung mit negativem Ergebnis (false / rot). Weil 1a, 1b und 1c "nicht gegeben" sind (false / rot), ist auch 1 "nicht gegeben" (false / rot).

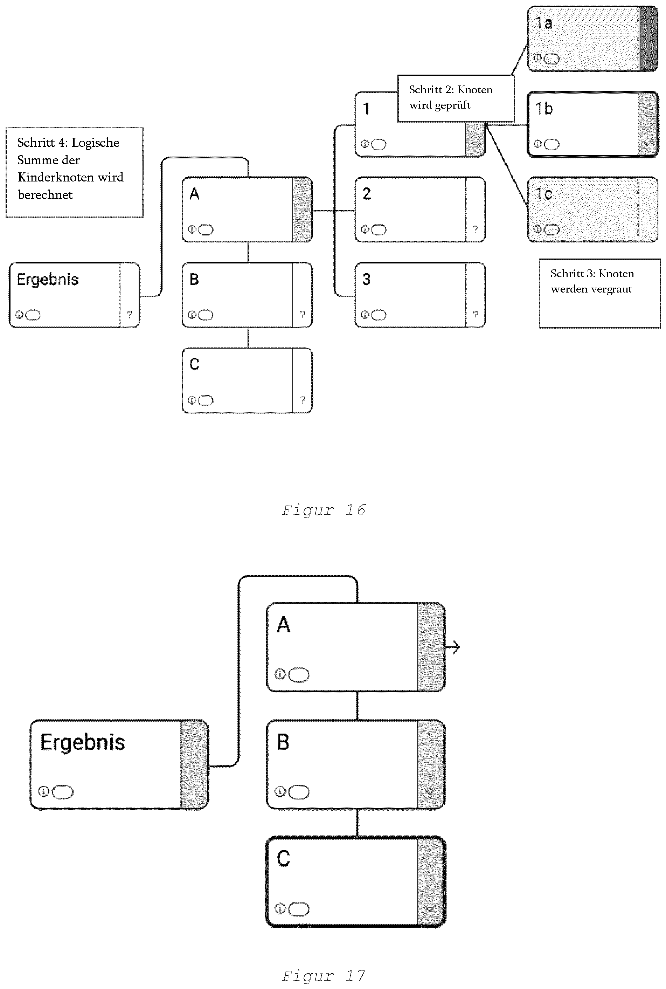

Figur 16 beschreibt, die Abfolge der automatischen Prüfung und Ergebnisrepräsentation in einer XOR-Verknüpfung mit positivem Ergebnis. Entlang der Rulemap wird der erste Endknoten des ersten Pfads (hier 1a) geprüft. Dieser ist nicht gegeben (false / rot), die Prüfung wird mit dem nächsten Endknoten des Pfads fortgesetzt (hier 1b). Da dieser gegeben ist (true / grün), ergibt sich aus der logischen Summe bereits das Ergebnis des Mutterknotens (1) als "gegeben" (true / grün). 1c wird nicht mehr geprüft (grau), weil exklusiv mit 1a und 1b verknüpft.
Figur 17 beschreibt das logische Verhalten in der UND-Verknüpfung mit positivem Ergebnis (true / grün). Da A, B und C "gegeben" sind(true / grün), ist auch "Ergebnis" "gegeben" (true / grün).

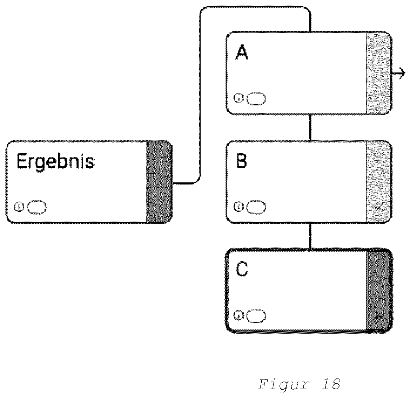

Figur 18 beschreibt das logische Verhalten in der UND-Verknüpfung mit negativem Ergebnis (true / grün). Da zwar A, B (true / grün), nicht aber C "gegeben" ist (false / rot), ist auch "Ergebnis" "nicht gegeben" (false / rot).
Figur 19 beschreibt die Darstellung einer Schadensersatz-Anspruchsprüfung. Sechs Merkmale müssen kumulativ (UND) gegeben sein. Das sechste Merkmal hat zwei sich ausschließende (XOR) Varianten.
Figur 20 beschreibt, dass an einem Endknoten Definitionen / Beschreibungen des zu prüfenden Merkmals hinterlegt werden.

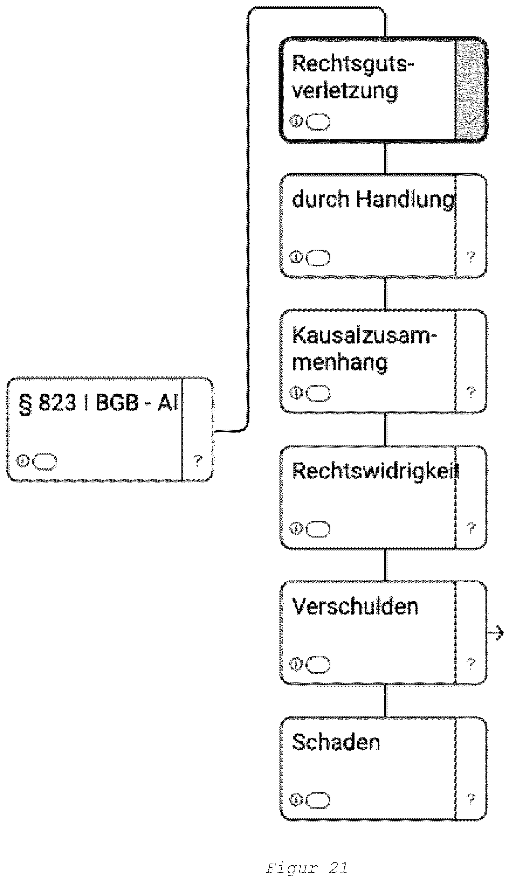

Figur 21 beschreibt, wie das (positve Prüf-) Ergebnis des ersten automatischen Prompts an die Rulemap zurückgegeben wird (true / grün).

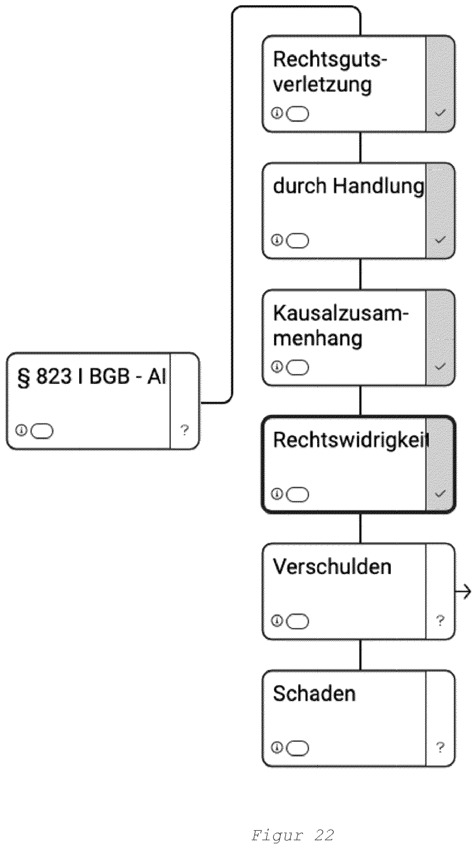

Figur 22 beschreibt, wie das (positve Prüf-) Ergebnis der ersten fünf automatischen Prompts sequentiell an die Rulemap zurückgegeben wird (true / grün).

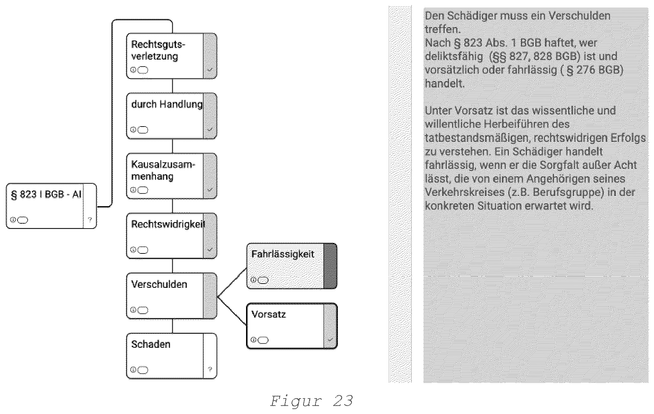

Figur 23 beschreibt, wie das (positve Prüf-) Ergebnis eines Knotens in der XOR-Verknüpfung an die Rulemap zurückgegeben wird (true / grün) und dass der mit ihm exklusiv verknüpfte Knoten nicht mehr prüffähig dargestellt wird (grau).

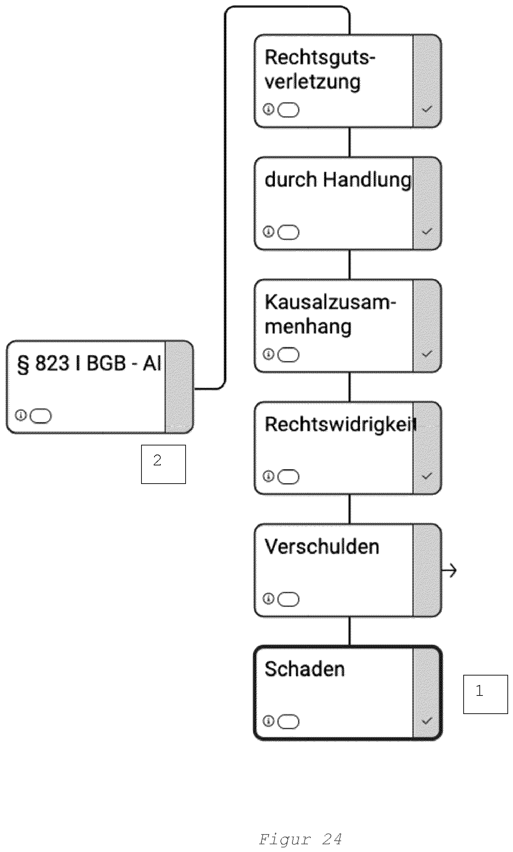

Figur 24 beschreibt, wie das (positve Prüf-) Ergebnis aller Kinder-Knoten des Startknotens zum positiven End-Ergebnis führen (true / grün).

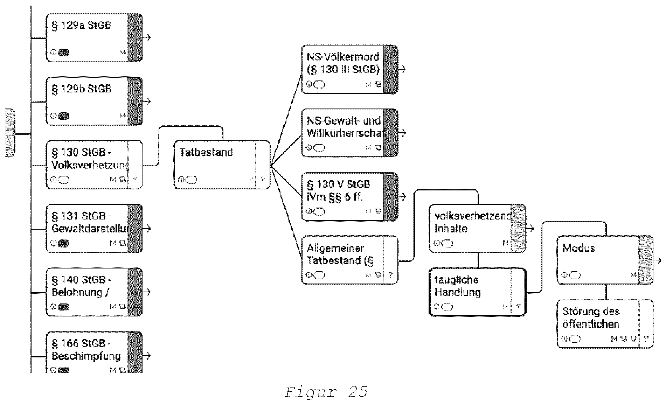

Figur 25: beschreibt die Darstellung der Regelstruktur des § 130 StGB (Volksverhetzung) in einer Rulemap und zeigt, dass in der konkret vorgenommenen Prüfung drei Tatbestandsalternativen nicht gegeben sind und die Prüfung aktuell in der vierten Tatbestandsalternative ist.

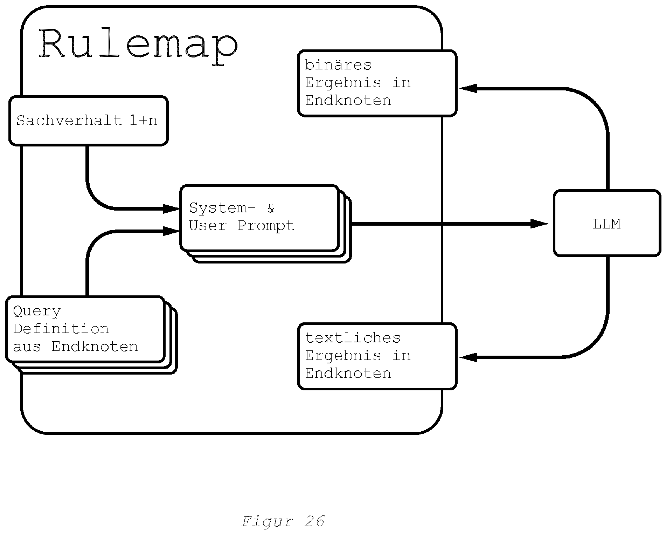

Figur 26: beschreibt den Gesamtprozess der Rule Based AI in einem Schaubild. Ein Sachverhalt (um 1+n erweiterbar) wird in eine Rule Based AI - Rulemap geladen, wo in den jeweiligen Endknoten Query Definitions zu den einzelnen Regeln gespeichert sind. Jede Query Definition wird einzeln, zusammen mit dem Sachverhalt und allgemeinen Texten zur Promptoptimierung an ein LLM übergeben. Das LLM liefert sodann ein binäres Ergebnis (true/false) und ein textliches Ergebnis in den Endknoten zurück, aus dem die Query Definition stammt. Dieser Prozess wird entsprechend der Logik der Rulemap für jeden darauffolgenden Endknoten wiederholt.

Beschreibung der Ausführungsform anhand der Figuren:

### Verfahrensschritte der Rule Based AI

Die Verfahrensschritte der Prüfung durch die Rule-based AI folgen dem Pfad, der sich aus der Regelarchitektur der Rulemap **(Fehler! Verweisquelle konnte nicht gefunden werden.)** ergibt. Die Rulemap ist ein Entscheidungsbaum, der eine Gesamtheit der Knoten **(Fehler! Verweisquelle konnte nicht gefunden werden.,** a) und ihren logischen Verknüpfungen (Linien, **Fehler! Verweisquelle konnte nicht gefunden werden.,** b) darstellt. Es kann verschiedene Arten der Verknüpfung geben, die dem möglichen logischen Zusammenhang zwischen verschiedenen Elementen entsprechen. Die Arten dieser Verknüpfungen sind: "Und" **(Fehler! Verweisquelle konnte nicht gefunden werden.,** a), "Nicht ausschließendes Oder" **(Fehler! Verweisquelle konnte nicht gefunden werden.,** b) und "Ausschließendes Oder" **(Fehler! Verweisquelle konnte nicht gefunden werden.,** c) und "Nicht". Die Rulemap ist nicht nur eine Visualisierung des Zusammenhanges zwischen verschiedenen Elementen, sondern sie ist gleichzeitig ohne weiteres Coding maschinell lauffähig bzw. interpetierbar. Die Art der angewendeten Verknüpfung determiniert, wie die Rulemap technisch ausgelesen wird.

In dem Startknoten der Rulemap steht das Ergebnis, d.h. die Prüfungsfrage. Die für dieses Ergebnis notwendigen Merkmale und Voraussetzungen werden als Kinderknoten abgebildet. Jeder Kinderknoten kann wiederum Mutterknoten für Kinderknoten einer weiteren Ebene sein. Die Tiefe der Architektur einer Rulemap hängt von der Komplexität des Regelwerks ab, das sie abbildet.

Bei der Prüfung entlang der Rulemap wird an jedem Knoten einzeln geprüft, ob das entsprechende Merkmal in einem konkreten Fall gegeben ist oder nicht. Die Prüfung folgt vom Startknoten dem Pfad von oben nach unten und von rechts nach links, wie in **Fehler! Verweisquelle konnte nicht gefunden werden.** dargestellt. Eine andere Reihenfolge von unten nach oben oder auf der Basis von Prioritäten ist denkbar. Die Endknoten eines Pfads (unterste Kinderknoten) werden geprüft und entweder bejaht und auf grün gesetzt oder verneint und auf rot gesetzt. Andere visuell schnell zu erfassenden Darstellungen sind denkbar. Der jeweilige Mutterknoten wird entsprechend der logischen Summe der untersuchten Kinderknoten durch den in der Rulemap-Software verbauten Algorithmus auf grün oder auf rot gesetzt.

Bei der Anwendung der "Rule-based AI" wird in diese regelbasierte Prüfung künstliche Intelligenz eingebaut. Die KI wird benutzt, um die Entscheidung zu treffen, ob ein einzelner Endknoten/Blattknoten auf grün oder auf rot gesetzt werden muss, das heißt, ob das im Knoten abgebildete Merkmal im konkreten zu prüfenden Fall gegeben ist oder nicht. Das wird technisch folgendermaßen ermöglicht:
Pro End-Knoten wird ein Prompt über die Schnittstelle an das LLM übergeben. Die so übergebene Query setzt sich inhaltlich aus folgenden Teilen zusammen:
   - System-Prompt
   - User-Prompt
      o Sachverhalt
      o Query Definition
:openai
(:token "xxxxxxx" :config
(:model "aaa" :temperature b :max_tokens ccc :top-p d)
:system "Du bist ein deutscher Strafrichter und musst Tatbestandsmerkmale prüfen. Hierbei gehen wir Schritt für Schritt vor, indem wir nacheinander alle Tatbestandsmerkmale in separaten Prompts prüfen.

Beachte, dass der [Sachverhalt] Fehler aufgrund von OCR Erkennung enthalten kann. Zudem fehlt jegliche Formatierung des Sachverhalts.

Denke Schritt für Schritt. Sollte das [Tatbestandsmerkmal] mehrere Denkschritte enthalten, bearbeite diese nacheinander in einer kausalen Reihenfolge. Sollte ein [Tatbestandsmerkmal] verschiedene Varianten beinhalten, prüfe diese einzeln auf ihre Einschlägigkeit.

Verwende für deine Analyse insbesondere die folgenden Auslegungsmethoden:
"Grammatische Auslegung" (oder auch "Auslegung aus dem Wortlaut")
"Systematische Auslegung" (oder auch "Auslegung aus dem Zusammenhang", in dem eine Gesetzesbestimmung steht)
"Historische Auslegung" (oder auch "Auslegung aus der Entstehungsgeschichte")
"Teleologische Auslegung" (oder auch "Auslegung nach dem Sinn und Zweck einer Gesetzesbestimmung")

Dieser Katalog an Auslegungsweisen ist nicht abschließend.

Deine Aufgabe wird sein, das gleich folgende [Tatbestandsmerkmal] in Bezug auf den [Sachverhalt] zu lösen.
- Deine Antwort muss 2 Parameter enthalten.
   1. eine binäre Antwort, 1 für ja, 0 für nein.
   2. eine kurze Begründung, warum du dich so entschieden hast. Die Begründung muss kurz und präzise auf den Punkt kommen und darf nicht mehr als 250 Zeichen lang sein. Sie muss sich auf die konkreten Entscheidungsgründe die aus dem Sachverhalt hervorgehen beziehen und gleichzeitig benennen, welche Argumente des Tatbestandsmerkmals zu der Entscheidung geführt haben. Wenn die Begründung ganz klar auf der Hand liegt, Du dir also hinsichtlich des Ergebnisses sehr sicher bist, halte die Begründung kurz, bzw. begründe gar nicht. Bist Du Dir unsicherer, verlängere deine Begründung.

Syntax: 0/1 "BEGRÜNDUNG". Genau so muss deine Antwort aussehen. Um die 0/1 darf kein Anführungszeichen oä. Zudem soll das Wort BEGRÜNDUNG nicht vorangestellt werden. Die Begründung soll im Urteilsstil erstellt werden. Ein Text im Urteilsstil wird in zwei Schritten gebildet:
1. Nennen des Ergebnisses
2. Angabe der tragenden Erwägungen, also die Begründung"
   :sachverhalt #variabler Feldwert#
   :userresult "0 = Nein; 1 = Ja. Die zwingende Syntax ist 1 ODER 0 BEGRÜNDUNG.

### Beispiel:

0 Eine Haftung des B aus 823 Abs. 1 BGB kommt nicht in Betracht, da er sein Verhalten nicht gemäß § 276 Abs. 2 BGB zu vertreten hat.")

Der System-Prompt, der dem eigentlichen User Prompt vorgeschaltet ist, übermittelt die o.g. Variablen und instruiert das LLM hinsichtlich des Kontextes. Der Systemprompt ist vorzugsweise spezifisch für den gesamten Regelbaum/Rulemap. Er kann allerdings auch nur für Bereiche des Regelbaums/Rulemap definierbar sein, aber er gilt zumindest für zwei oder mehr Knoten, um so den Unterschied zu den Knoten spezifischen Informationen darzustellen. Das bedeutet, es werden im Hintergrund globale Einstellungen für die Rulemap hinterlegt, die diese abstrakt und für eine beliebige Anzahl an Sachverhalten verwendet.

Zu Beginn ist der Parameter "temperature", der die Zufälligkeit oder Kreativität der von der KI generierten Ausgaben steuert, auf ein möglichst geringes Maß (0-10 %) einzustellen. Im juristischen Kontext lautet der System-Prompt dann bspw. "Der Assistant ist ein deutscher Richter und muss Tatbestandsmerkmale prüfen". Die Definition eines Tatbestandsmerkmals ist der Query Definition gleichzusetzen. Ein Tatbestand kann regelmäßig aus einer Vielzahl von Merkmalen bestehen. Ein Endknoten referenziert jeweils nur ein Merkmal. Die Summe der Merkmale (Elternknoten) ergibt dann den Tatbestand.

Das Tatbestandsmerkmal ist in der Query-Definition eines Endknotens definiert. Bspw.: "Der Inhalt müsste irgendwie in Zusammenhang mit einer Vereinigung stehen.

Eine Vereinigung ist ein auf längere Dauer angelegter, von einer Festlegung von Rollen der Mitglieder, der Kontinuität der Mitgliedschaft und der Ausprägung der Struktur unabhängiger organisierter Zusammenschluss von mehr als zwei Personen zur Verfolgung eines übergeordneten gemeinsamen Interesses.

Hierfür kann auch Wissen des Large Language Modells genutzt werden.

Positivbeispiele: Parteien, Vereine.

Negativbeispiele: Vereinigung ist nur von kurzer Dauer, oder nur lose Verbindung zwischen Personen oder keine gemeinsame Organisation oder es sind weniger als 3 Personen."

Zudem wird bereits hier die Syntax für die Ausgabe des Assistenten vorgegeben, z.B. "Wenn das Merkmal vorliegt, antworte ausschließlich mit "1", wenn es nicht vorliegt, antworte ausschließlich mit "0". Andere logische Darstellungen sind natürlich denkbar wie True oder False etc. Diese Einstellung ist vorzugsweise im Systemprompt hinterlegt kann aber auch in einem oder mehreren User Prompts festgelegt werden.

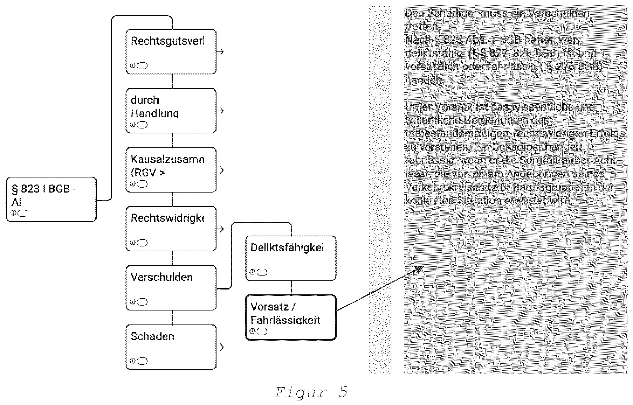

Der nachgeschaltete User Prompt enthält den Sachverhalt, der gegen das in der Rulemap hinterlegte Regelmodell geprüft wird sowie eine Definition des Merkmals (Query Definition) selbst (Figur 5).

Der User-Prompt ist die Kombination aus dem variablen Sachverhalt, der über einen Feldwert übergeben wird, und der Query-Definition des Endknotens.

Der Sachverhalt wird, wenn er originär nicht in Textform vorliegt, in diese umgewandelt. Liegt der Sachverhalt also bspw. nur als Bild vor, wird dieses vorab durch OCR und LLM interpretiert, also die in einem Bild enthaltene Textmenge extrahiert (OCR) und/oder das Bild vom LLM textlich beschrieben. Sofern das für die Rule-Based AI genutzte LLM auch Bilder als Input akzeptiert, kann dieser Umwandlungsschritt übersprungen werden.

Die Query Definition kann je nach Art der Rulemap eine natürlich-sprachliche Beschreibung des zu prüfenden Merkmals / der zu prüfenden Voraussetzung sein. Sie ist als Entscheidungsfrage formuliert, also kann nur mit "Ja" oder "Nein" beantwortet werden, etwa "Liegt das Merkmal X vor?" oder sind die Werte in bestimmten Bereichen bzw. Intervallen.

Das LLM ermittelt, ob der im konkreten Fall übergebene Sachverhalt mit der Query Definition des Knotens übereinstimmt. Wenn ja, wird als Ergebnis der KI-Prüfung z.B. "1" zurückgegeben und der Knoten wird auf "gegeben" gesetzt **(Fehler! Verweisquelle konnte nicht gefunden werden.).** Wenn als Ergebnis der KI-Prüfung "0" zurückgegeben wird, wird der Knoten hingegen auf "nicht gegeben" gesetzt **(Fehler! Verweisquelle konnte nicht gefunden werden.).** Die Farben sind hier nur exemplarisch genannt, es können auch andere Darstellungen verwendet werden.

Nachdem der Knoten entweder auf "gegeben"/true oder auf "nicht gegeben"/false gesetzt wird, prüft die Rulemap anhand der logischen Verknüpfung mit dem davorstehenden Mutterknoten/Inneren Knoten automatisiert, ob der Mutterknoten "gegeben" oder "nicht gegeben" ist. Je nach Verwendung der Verknüpfungsart ergibt sich, welcher Endknoten/Blattknoten als nächster mithilfe der KI geprüft werden muss. Das technische Verfahren für diese drei logischen Verknüpfungsarten ist wie folgt:

### Technisches Verfahren bei "Und"-Verknüpfung:

Sind bei der "Und"-Verknüpfung alle Kinderknoten auf gegeben/true/1 gesetzt, wird der Mutterknoten als logische Summe auf "gegeben" gesetzt **(Fehler! Verweisquelle konnte nicht gefunden werden.),** logische Und-Verknüpfung. Ist auch nur ein Koten auf "nicht gegeben" gesetzt, wird der Mutterknoten auch auf "nicht gegeben" gesetzt **(Fehler! Verweisquelle konnte nicht gefunden werden.).**

Die maschinelle Prüfung folgt bei der "Und"-Verknüpfung vorzugsweise mit den folgenden Schritten:
Schritt 1: Der oberste Knoten wird geprüft und wenn bejaht, auf "gegeben" gesetzt.
Schritt 2: Der nächste Knoten wird geprüft und wenn bejaht, auf "gegeben" gesetzt.
Schritt 3: Der Prozess wird fortgesetzt, bis ein logisches Ergebnis für den Mutterknoten vorliegt: Wenn ein Knoten auf "nicht gegeben" gesetzt wird, findet keine weitere Prüfung statt, weil der Mutterknoten schon auf "nicht gegeben" gesetzt wird **(Fehler! Verweisquelle konnte nicht gefunden werden.)**.

### Technisches Verfahren beim "Nicht ausschließenden Oder":

Ist beim "Nicht ausschließenden Oder" mindestens ein Knoten auf "gegeben" gesetzt, wird der Mutterknoten als logische Summe auf "gegeben" gesetzt **(Fehler! Verweisquelle konnte nicht gefunden werden.).** Werden alle Kinderknoten auf "nicht gegeben" gesetzt, wird der Mutterknoten auch auf "nicht gegeben" gesetzt **(Fehler! Verweisquelle konnte nicht gefunden werden.).** Das technische Verfahren folgt hier den folgenden Schritten **(Fehler! Verweisquelle konnte nicht gefunden werden.)**:
- Alle Endknoten in einem "Nicht ausschließenden Oder" werden geprüft und entweder auf "gegeben" oder "nicht gegeben" gesetzt.
- Dann wird der Mutterknoten entsprechend der logischen Summe der Kinderknoten entweder auf "gegeben" oder "nicht gegeben" gesetzt.

### Technisches Verfahren beim "Ausschießenden Oder":

Beim "Ausschließenden Oder" kann logisch nur ein Kinderknoten auf "gegeben" gesetzt werden. Ist ein Kinderknoten auf "gegeben" gesetzt, so werden weitere Kinderknoten inaktiv (graue Visualisierung) und nicht mehr geprüft; der Mutterknoten wird auf "gegeben" gesetzt **(Fehler! Verweisquelle konnte nicht gefunden werden.).**

Sind alle Kinderknoten auf "nicht gegeben" gesetzt, wird der Mutterknoten auch auf "nicht gegeben" gesetzt **(Fehler! Verweisquelle konnte nicht gefunden werden.).**

Das technische Verfahren folgt hier den folgenden Schritten **(Fehler! Verweisquelle konnte nicht gefunden werden.):**
- Die Kinderknoten werden von oben nach unten geprüft.
- Wird ein Knoten auf "nicht gegeben" gesetzt, wird der nächste Knoten geprüft.
- Wird ein Knoten auf "gegeben" gesetzt, werden keine weiteren Knoten mehr geprüft.
- Der Mutterknoten wird entsprechend der logischen Summe der Kinderknoten entweder auf "gegeben" oder "nicht gegeben" gesetzt.

Die Ermittlung der Knoten und Übergabe der erläuternden Definitionen an die KI via Prompt wird so lange wiederholt, bis alle diejenigen Endknoten der Rulemap geprüft sind, die für ein Gesamtprüfungsergebnis notwendig sind, so dass also der Startknoten automatisiert auf "gegeben" **(Fehler! Verweisquelle konnte nicht gefunden werden.)** oder auf "nicht gegeben" **(Fehler! Verweisquelle konnte nicht gefunden werden.)** gesetzt, die Prüfungsfrage also bejaht oder verneint werden kann.

Grundsätzlich können auch andere Operatoren verwendet werden, wie z.B. Bereichs-Operatoren, die bestimmen ob ein Ergebnis in einem bestimmen Bereich liegt. Eine solche Abfrage könnten z.B. an einem Blattknoten als Token bzw. Query gegeben sein. Die Erfindung ist nicht auf die booleschen Operatoren AND, OR, XOR und NOT beschränkt.

Rule-based AI kann für automatisierte Prüfungen von Sachverhalten im regelbasierten Kontext benutzt werden. Typische regelbasierte Kontexte sind Compliance-Prüfungen, rechtliche Regeln aller Art, Prozessregeln, medizinische Regeln (Leitlinien), technische Beschreibungen und Abläufe, Bedienungsregeln für Maschinen und sonstiges wissenschaftliches regelbasiertes Vorgehen.

Vorteilhafte Wirkungen der Erfindung bestehen in erster Linie darin, dass mit Hilfe der Rule-based AI regelbasierte Systeme mit LLM kombiniert werden. Eine automatisierte Prüfung wird anhand vordefinierter Regeln transparent und nachvollziehbar vorgenommen werden. Die Prüfung der einzelnen Merkmale und Voraussetzungen einer zielorientierten Regel erfolgt pro - maschinell - übergebenem Sachverhalt individuell und atomar durch die künstliche Intelligenz. Das Verfahren wird durch eine Rulemap als visuellen Entscheidungsbaum gesteuert. So ist eine Möglichkeit der Erfindung die visuelle Darstellung auf einem Bildschirm des Computers zu ermöglichen. Der Regelbaum wird grafisch dargestellt und enthält für den konkret geprüften Sachverhalt alle seine Ergebnisse auch visuell. Die logischen Verknüpfungen und deren Ergebnisse sind farblich unterschiedlich dargestellt, so dass es einem Benutzer sofort ersichtlich ist, wie das Ergebnis zu Stande gekommen ist. Er kann die Logik schnell nachvollziehen. Im Gegensatz zu einer reinen nicht regelbasierten KI entsteht hierdurch Transparenz und Nachvollziehbarkeit der Ergebnisse, was auch in besseren Resultaten enden kann. Die Erfindung lässt Fragen von der KI an der Stelle beantworten, wo dies notwendig ist, und bestimmt dann regelbasiert das Ergebnis anhand der logischen Summe der beantworteten Fragen (logische Summe der bejahten und verneinten Elemente).

### Die Funktionalität der rule-based AI kann mithilfe folgenden Beispiels illustriert werden:

In einem juristischen Fall mit folgendem Sachverhalt ist zu prüfen, ob B gegen A einen Anspruch auf Schadensersatz hat:
*A versetzt B im Verlauf eines Streits eine heftige Ohrfeige. Im Versuch, der Ohrfeige auszuweichen, stürzt B und verletzt sich schwer. Aufgrund dieser unerwarteten schweren Verletzung entstehen B Behandlungskosten i.H.v. 5000 Euro.*

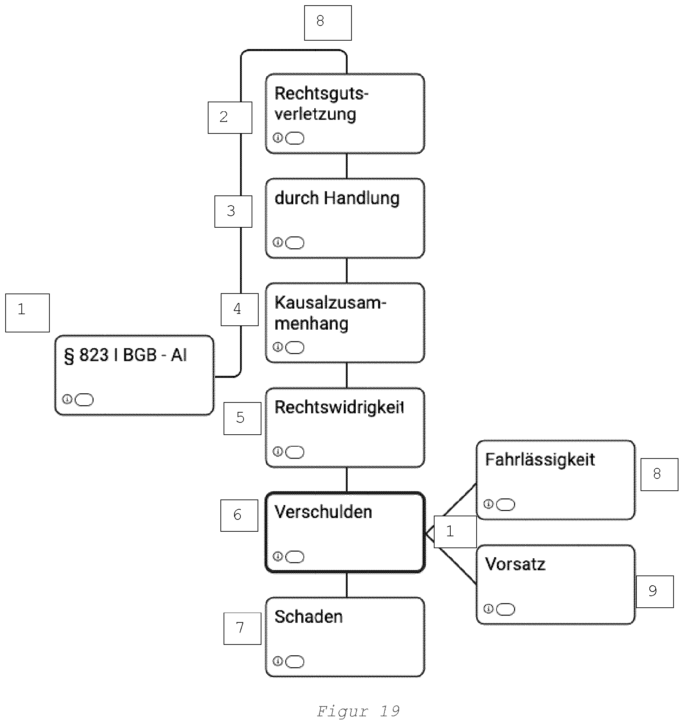

**Schritt 1:** Um den Anspruch in dem gegebenen Fall zu prüfen, wird als erster Schritt eine Rulemap **(Fehler! Verweisquelle konnte nicht gefunden werden.)** erstellt, die die gewünschten Regeln für die Prüfung des Anspruchs visualisiert. Die Rulemap beginnt mit dem Ergebnis im Startknoten **(Fehler! Verweisquelle konnte nicht gefunden werden.,** Nr. 1). Die Merkmale für diesen Anspruch sind als Kinderknoten dargestellt **(Fehler! Verweisquelle konnte nicht gefunden werden.,** Nr. 2-7). Die Merkmale in **Fehler! Verweisquelle konnte nicht gefunden werden.,** Nr. 2 - 7 sind als kumulative Voraussetzungen verknüpft **(Fehler! Verweisquelle konnte nicht gefunden werden.,** Nr. 8), weil die Regelfrage im Startknoten erst dann bejaht werden kann, wenn alle Vorsetzungen gegeben sind. Die Voraussetzungen von Figur 19 Nr. 6 ("Verschulden") in **Fehler! Verweisquelle konnte nicht gefunden werden.,** Nr. 9 und **Fehler! Verweisquelle konnte nicht gefunden werden.,** Nr. 10 sind mit "exklusivem oder" **(Fehler! Verweisquelle konnte nicht gefunden werden.,** Nr. 10) verknüpft, weil Verschulden entweder Vorsatz oder Fahrlässigkeit sein kann, nicht aber beides.

**Schritt 2:** Für alle Endknoten werden Definitionen als Query/Token Definitionen eingefügt. Auf der **Fehler! Verweisquelle konnte nicht gefunden werden.** ist zum Beispiel eine Definition **(Fehler! Verweisquelle konnte nicht gefunden werden.** Nr. 12) des Endknotens "Vorsatz" **(Fehler! Verweisquelle konnte nicht gefunden werden.** Nr. 9) wiedergegeben.

**Schritt 3:** Ein Vorgang wird gestartet, der eine maschinelle, automatisierte Prüfung ausführt. Die Prüfung findet von oben nach unten und von rechts nach links statt, also vom Blatt zur Wurzel, es ist zu beachten, dass der Baum ggfs mehrere Wurzeln hat, die dann nacheinander oder parallel abzuarbeiten sind. Als Erstes wird der auf **Fehler! Verweisquelle konnte nicht gefunden werden.** mit Nr. 2 gekennzeichnete Endknoten geprüft. Die Query Definition des Knotens wird zusammen mit dem Sachverhalt an das LLM als Prompt übergeben. Das LLM vergleicht den Sachverhalt mit der Query Definition und gibt zurück, dass das Merkmal in diesem Fall gegeben ist. Der Endknoten wird als "gegeben" markiert **(Fehler! Verweisquelle konnte nicht gefunden werden.).**

**Schritt 4:** Dasselbe Verfahren wird für die auf **Fehler! Verweisquelle konnte nicht gefunden werden.** mit Nr. 3, 4 und 5 gekennzeichneten Knoten wiederholt: Die jeweilige Query Definition wird Schritt für Schritt zusammen mit dem Sachverhalt jeweils als Prompt an das LLM übergeben.

Das LLM vergleicht den Sachverhalt mit den Query Definitions und gibt zurück, dass diese Merkmale in diesem Fall gegeben sind. Die geprüften Endknoten werden nacheinander als "gegeben" markiert **(Fehler! Verweisquelle konnte nicht gefunden werden.).**

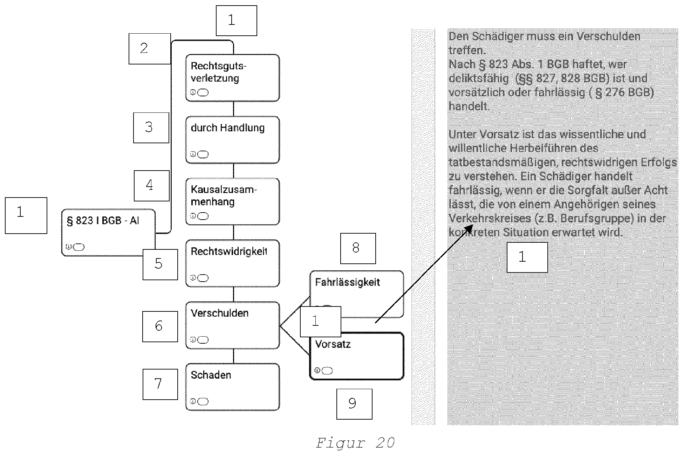

**Schritt 5:** Um zu entscheiden, ob der in **Fehler! Verweisquelle konnte nicht gefunden werden.** mit Nr. 6 gekennzeichnete Knoten auf "gegeben" oder "nicht gegeben" zu setzen ist, werden seine Kinderknoten geprüft. Als Erstes wird die Definition aus dem Knoten dem auf **Fehler! Verweisquelle konnte nicht gefunden werden.** mit Nr. 8 gekennzeichneten Knoten zusammen mit dem Sachverhalt an das LLM übergeben. Das LLM vergleicht Sachverhalt mit Definition und gibt zurück, dass dieses Merkmal hier gegeben ist. Der auf **Fehler! Verweisquelle konnte nicht gefunden werden.** mit Nr. 9 gekennzeichnete Knoten wird auf gegeben gesetzt. Der auf **Fehler! Verweisquelle konnte nicht gefunden werden.** mit Nr. 9 gekennzeichnete Knoten wird wegen der angewendeten "Ausschließendes Oder"-Verknüpfung (Figur 20 Nr. 11) inaktiv.

Der auf **Fehler! Verweisquelle konnte nicht gefunden werden.** mit Nr. 6 gekennzeichnete Knoten wird auf "gegeben" gesetzt **(Fehler! Verweisquelle konnte nicht gefunden werden.).**

**Schritt 6:** Der auf **Fehler! Verweisquelle konnte nicht gefunden werden.** mit Nr. 7 gekennzeichnete Knoten wird geprüft. Seine Query Definition wird zusammen mit dem Sachverhalt an das LLM via Prompt übergeben. Das LLM vergleicht Sachverhalt mit Query Definition und gibt zurück, dass dieses Merkmal im zu prüfenden Fall gegeben ist. Der Knoten wird als "gegeben" markiert **(Fehler! Verweisquelle konnte nicht gefunden werden.,** Nr. 1).

**Schritt 7:** Der Startknoten 1 wird auf "gegeben" gesetzt **(Fehler! Verweisquelle konnte nicht gefunden werden.,** Nr. 2). Die Prüfung durch "Rule-based AI" ist abgeschlossen.

### Übergabebeispiel Rulemap-KI:

Geprüft werden soll die strafrechtliche Relevanz für folgenden Sachverhalt:
*Am 15. März 2024, um 14:45 Uhr, veröffentlichte ein Nutzer auf der Social-Media-Plattform TikTok einen Post mit dem Inhalt: "#Merkel Wie ist diese Schlampe eigentlich auf die Idee gekommen das Land so tiefgreifend zu verändern? Sie hätte die ganzen blöden Ausländer lieber verrecken lassen sollen. #Merkelmussweg #refugeesnotwelcome". Dieser Post erhielt bis zum 20. März 2024 insgesamt 5.000 Likes und wurde 1.200 Mal geteilt. Die Kommentare unter dem Post waren gemischt, mit einigen Nutzern, die Zustimmung signalisierten, während andere vehement gegen die Wortwahl und die darin zum Ausdruck gebrachte Meinung protestierten.*

*Ein Trusted Flagger, der regelmäßig Inhalte auf der Plattform überprüft, meldete den Post am 21. März 2024 um 10:30 Uhr wegen des Verdachts auf Rechtswidrigkeit. Der Nutzer, der den* Post *erstellt hatte, besaß zu diesem Zeitpunkt 20.000 Follower. Der Trusted Flagger argumentierte, dass der Post aufgrund von Hassrede und der Verletzung von Bestimmungen gegen Volksverhetzung nach dem deutschen Strafgesetzbuch als rechtswidrig einzustufen sei. Diese Einschätzung bezog sich auf die herabwürdigende Bezeichnung einer öffentlichen Figur und die abwertende Aussage gegenüber einer Gruppe von Menschen aufgrund ihrer Herkunft.*

*TikTok entschied am 25. März 2024, den Post nicht zu entfernen, mit der Begründung, dass die Plattform ein Raum für freie Meinungsäußerung sei und der Post die internen Richtlinien zur Meinungsfreiheit nicht verletze. Diese Entscheidung führte zu weiteren Debatten und Diskussionen innerhalb der Community.*

Die Rulemap bildet - neben zahlreichen anderen Tatbeständen - den Tatbestand einer Volksverhetzung gemäß § 130 StGB ab. (Figur 27)

Durch das automatische Zusammenspiel aus Ruelmap und LLM wurden bereits die Spezialvarianten des § 130 StGB geprüft und verneint, das Tatbestandsmerkmal "volksverhetzende Inhalte" bejaht, gleichfalls das Tatbestandsmerkmal "Modus" des diesem übergeordneten Merkmals "taugliche Handlung".

Die Rulemap gibt nun vor, dass als nächstes das zweite Tatbestandsmerkmal davon, die "Störung des öffentlichen Friedens" geprüft werden muss. Hierzu ruft die Rulemap via API automatisch einen Prompt der folgenden Art auf:

### Variante 1: Bloße Ja-und-Nein-Prüfung

Globale Einstellungen pro Rulemap. Die globalen Einstellungen pro Rulemap im hier interessierenden Kontext sind die Einstellungen für Modell, Systemprompt und Userprompt, also die Gesamtheit der Bestandteile der Query, die nachfolgend beschrieben wird.

Definition des Tatbestandsmerkmals (Endknoten, Blatt) "Störung des öffentlichen Friedens", gegen das der Sachverhalt geprüft wird. Im Folgenden wird ein Beispiel für einen Knotenaufruf gegeben. Hierbei steht list:model für das LLM, max_token definiert den Umfang des Rückgabewerts. 1 Token steht dabei für 1-3 Zeichen; :system steht für den System Prompt; :user für den User Prompt.
(ask-openai
(list :model "gpt-4-1106-preview"
:temperature 0
:max_tokens 1)
:system "Du bist ein deutscher Richter und musst Tatbestandsmerkmale prüfen. Hierbei gehen wir Schritt für Schritt vor, indem wir nacheinander alle Tatbestandsmerkmale in separaten Prompts prüfen.
Beachte, dass der [Sachverhalt] Fehler aufgrund von OCR Erkennung enthalten kann. Zudem fehlt jegliche Formatierung des Sachverhalts.
Deine Aufgabe wird sein, das gleich folgende [Tatbestandsmerkmal] in Bezug auf den [Sachverhalt] zu lösen.
Denke Schritt für Schritt. Sollte das [Tatbestandsmerkmal] mehrere Denkschritte enthalten, bearbeite diese nacheinander in einer kausalen Reihenfolge. Sollte ein [Tatbestandsmerkmal] verschiedene Varianten beinhalten, prüfe diese einzeln auf ihre Einschlägigkeit.
   - Deine Antwort darf ausschließlich aus '1' für JA oder '0' für NEIN bestehen."
:user "
[Start Sachverhalt]
Am 15. März 2024, um 14:45 Uhr, veröffentlichte ein Nutzer auf der Social-Media-Plattform TikTok einen Post mit dem Inhalt: "#Merkel Wie ist diese Schlampe eigentlich auf die Idee gekommen das Land so tiefgreifend zu verändern? Sie hätte die ganzen blöden Ausländer lieber verrecken lassen sollen. #Merkelmussweg #refugeesnotwelcome".
Dieser Post erhielt bis zum 20. März 2024 insgesamt 5.000 Likes und wurde 1.200 Mal geteilt. Die Kommentare unter dem Post waren gemischt, mit einigen Nutzern, die Zustimmung signalisierten, während andere vehement gegen die Wortwahl und die darin zum Ausdruck gebrachte Meinung protestierten.
Ein Trusted Flagger, der regelmäßig Inhalte auf der Plattform überprüft, meldete den Post am 21. März 2024 um 10:30 Uhr wegen des Verdachts auf Rechtswidrigkeit. Der Nutzer, der den Post erstellt hatte, besaß zu diesem Zeitpunkt 20.000 Follower. Der Trusted Flagger argumentierte, dass der Post aufgrund von Hassrede und der Verletzung von Bestimmungen gegen Volksverhetzung nach dem deutschen Strafgesetzbuch als rechtswidrig einzustufen sei. Diese Einschätzung bezog sich auf die herabwürdigende Bezeichnung einer öffentlichen Figur und die abwertende Aussage gegenüber einer Gruppe von Menschen aufgrund ihrer Herkunft.
TikTok entschied am 25. März 2024, den Post nicht zu entfernen, mit der Begründung, dass die Plattform ein Raum für freie Meinungsäußerung sei und der Post die internen Richtlinien zur Meinungsfreiheit nicht verletze. Diese Entscheidung führte zu weiteren Debatten und Diskussionen innerhalb der Community.
[Ende Sachverhalt]
[Start Tatbestandsmerkmal]
Fraglich ist, ob der Inhalt geeignet ist, den öffentlichen Frieden zu stören.
Der öffentliche Friede umfasst den Zustand allgemeiner Rechtssicherheit und des befriedeten Zusammenlebens der Bürger sowie das Bewusstsein der Bevölkerung, in Ruhe und Frieden zu leben.
Ein Inhalt ist geeignet, den öffentlichen Frieden zu stören, wenn befürchtet werden muss, dass der Inhalt das Vertrauen in die öffentliche Rechtssicherheit erschüttert. Eine tatsächliche Störung des öffentlichen Friedens ist nicht erforderlich.
Für eine Störung des öffentlichen Friedens kann eine hohe Intensität des Angriffs, die Größe und Homogenität der von einer Äußerung betroffenen Gruppe und insbesondere die mangelnde gesellschaftliche Integration des von der Äußerung betroffenen Bevölkerungsteils sprechen. Umso jünger die Adressaten der Äußerung, desto wahrscheinlicher ist eine Störung des öffentlichen Friedens. Für die Geeignetheit zur Störung des öffentlichen Friedens reicht aus, wenn die beschimpfende Äußerung nur einem einzelnen Anhänger des betroffenen Bekenntnisses zugeht, sofern nach den konkreten Umständen damit zu rechnen ist, dass die Beschimpfung einer breiten Öffentlichkeit bekannt wird.
Gegen eine Störung des öffentlichen Friedens kann eine gute gesellschaftliche Integration der angegriffenen Gruppe sprechen, sowie die mangelnde Empfänglichkeit kritisch eingestellter Empfänger der Äußerung, wie zum Beispiel bei einem volksverhetzendem Leserbrief, dessen Abdruck kaum zu erwarten war oder wenn die Äußerung von einem Jugendlichen oder einem nicht ernstzunehmenden Erwachsenen kommt. Keine Eignung zur Störung des öffentlichen Friedens bei Veröffentlichung eines kritischen Artikels in einer generell als kritisch angesehenen Zeitschrift, bei deren Leser keine erkennbare Gefahr der Förderung von Intoleranz bestand.
[Ende Tatbestandsmerkmal]
"
)

Der prompt wie er oben dargestellt ist, umfasst das LLM (Modell) "gpt-4-1106-preview" die Temperature und die Anzahl der übergebenen Tokens. Die Temperatur steht für die Zufälligkeit des Ergebnisses; eine hohe Temperatur steht für eine hohe Zufälligkeit. Für die meisten Beispiele ist die Zufälligkeit auf 0 gesetzt. Es kann aber auch andere Situationen geben, die einen anderen Wert berücksichtigen. Ferner umfasst der Prompt den System-Prompt und den User Prompt, jeweils durch system: und user: eingeleitet. Der User Prompt ist wiederum unterteilt in die Bereiche Sachverhalt und Tatbestandsmerkmal. Tabestandmerkmale sind an jedem Blattknoten vorgegeben, der System-Prompt ist die globale Einstellung, die für die gesamte Rulemap/Regelbaum vorgegeben ist. In diesem Fall referenziert der System-Prompt jeweils den Sachverhalt und die Tatbestandsmerkmale. Der Sachverhalt wird für jeden Durchlauf der Rulemap neu bestimmt und automatisiert in den Prompt eingefügt.

Das LLM gibt das angefragte Prüfergebnis via API zurück, die Rulemap speichert es und bildet entlang der Logik der Rulemap den nächsten Prompt auf die gleiche Weise, also aus globalen Einstellungen, dem konkreten Sachverhalt und der Definition des logisch nächsten Knotens in der Rulemap. Auf diese Weise ruft die Rulemap Endknoten für Endknoten via API einen automatischen Prompt der oben beschrieben Struktur auf, speichert das Prüfergebnis und ermittelt das nächste Prüfprogramm.

### Variante 2: Begründete Prüfung

Um auch die Begründung jedes einzelnen Prüfungsschritts in der Rulemap festzuhalten, wird ein Prompt der folgenden Struktur generiert:
(ask-openai
(list :model "gpt-4-1106-preview"
:temperature 0
:max_tokens 900)
:system "Du bist ein deutscher Strafrichter und musst Tatbestandsmerkmale prüfen. Hierbei gehen wir Schritt für Schritt vor, indem wir nacheinander alle Tatbestandsmerkmale in separaten Prompts prüfen.
Beachte, dass der [Sachverhalt] Fehler aufgrund von OCR Erkennung enthalten kann. Zudem fehlt jegliche Formatierung des Sachverhalts.
Denke Schritt für Schritt. Sollte das [Tatbestandsmerkmal] mehrere Denkschritte enthalten, bearbeite diese nacheinander in einer kausalen Reihenfolge. Sollte ein [Tatbestandsmerkmal] verschiedene Varianten beinhalten, prüfe diese einzeln auf ihre Einschlägigkeit.
Deine Aufgabe wird sein, das sogleich folgende [Tatbestandsmerkmal] in Bezug auf den [Sachverhalt] zu lösen.
   - Deine Antwort muss 2 Parameter enthalten.
      1. eine binäre Antwort, 1 für ja, 0 für nein.
      2. eine kurze Begründung, warum du dich so entschieden hast. Die Begründung muss kurz und präzise auf den Punkt kommen und darf nicht mehr als 250 Zeichen lang sein. Sie muss sich auf die konkreten Entscheidungsgründe die aus dem Sachverhalt hervorgehen beziehen und gleichzeitig benennen, welche Argumente des Tatbestandsmerkmals zu der Entscheidung geführt haben. Wenn die Begründung ganz klar auf der Hand liegt, Du dir also hinsichtlich des Ergebnisses sehr sicher bist, halte die Begründung kurz, bzw. begründe garnicht. Bist Du Dir unsicherer, verlängere deine Begründung.
Syntax: 0/1 'BEGRÜNDUNG'. Genau So muss deine Antwort aussehen. Um die 0/1 darf kein Anführungszeichen oä."
:userresult "Wenn im Sachverhalt mehrere unterschiedliche Teil-Sachverhalte vorliegen, betrachte trotzdem ausschließlich die Gesamtheit des Sachverhalts und teile nicht in deiner Entscheidung und nicht in der Begründung in verschiedene Teilsachverhalte auf. 0 = Nein; 1 = Ja. Die zwingende Syntax ist 1 ODER 0 und danach die Begründung.

### Beispiel:

0 Eine Haftung des B aus 823 Abs. 1 BGB kommt nicht in Betracht, da er sein Verhalten nicht gemäß § 276 Abs. 2 BGB zu vertreten hat.")"

Der Unterschied liegt also nur in den globalen Einstellungen, Sachverhalt und Tatbestandsmerkmaldefinition bleiben gleich. Es wird hier in dem System-Prompt vorgegeben, dass die Antwort aus einem binären-Wert (logischen Wert) und einer Text-Begründung bestehen muss. Dies sind globale Parameter, die jedem System-Prompt in der Rulemap übergeben werden. Die Rulemap speichert hier nicht nur das Rückgabeergebnis, sondern auch die -begründung in einem Objekt am Endknoten. Aus der Summe dieser Begründungen generiert die Rulemap im Anschluss eine komplett begründete Entscheidung.

## Patentansprüche

1. Verfahren zur regelbasierten Integration eines Large Language Models, LLM, umfassenden einen Regelbaum, Rulemap, dessen innere Knoten logische Verknüpfungen darstellen und an dessen Blätter Prompts zur Übergabe an das LLM hinterlegt sind, wobei die Prompts jeweils zusammengesetzt sind aus einem System-Prompt und einem oder mehreren User-Prompts, wobei User-Prompts einen spezifischen Sachverhalt und eine Query Definition umfassen, die die Form des Ergebnisses bestimmen und im Regelbaum im nächsten inneren Knoten zu dem Prompt in der logischen Verknüpfung verwendet werden,
wobei der System-Prompt den Kontext aus global vorgegebenen Einstellung und Informationen festlegt, die für die spezfische Rulemap vorgegeben sind,
wobei die so erzeugen Prompts dem LLM übergeben werden, um eine logische Antwort zu erzeugen, die geeignet ist in dem Regelbaum ausgewertet zu werden, wobei der Regelbaum durchlaufen wird von den Blättern zu der einen oder mehreren Wurzeln, um ein logisches Endergebnis zu erzeugen.

2. Das Verfahren nach dem vorhergehenden Anspruch wobei der User-Prompt aus dem Sachverhalt und der Query Definition besteht, wobei die Query-Definition spezifisch vorgegeben ist für jedes Blatt und der Tatbestand während der Abarbeitung des Regelbaums automatisch hinzugefügt wird.

3. Das Verfahren nach dem vorhergehenden Anspruch, wobei das LLM ermittelt, ob der übergebene Sachverhalt mit der Query Definition des Blatts übereinstimmt.

4. Das Verfahren nach dem vorhergehenden Anspruch, wobei wenn der Sachverhalt nicht in Textform vorliegt, dieser automatisch in Textform umgewandelt wird vorzugsweise durch OCR.

5. Das Verfahren nach einem der vorhergehenden Ansprüche, wobei die logischen Verknüpfungen innerhalb des Regelbaums eine oder mehrere sind von: und, oder, x- oder, nicht.

6. Das Verfahren nach einem der vorhergehenden Ansprüche, wobei der System-Prompt den Sachverhalt und/oder die Query-Definiton referenziert.

7. Das Verfahren nach einem der vorhergehenden Ansprüche, wobei eine visuelle Darstellung des Entscheidungsbaums auf einem Computerbildschirm erfolgt, die erkennen lässt welche Ergebnisse an den Knoten vorliegen, insbesondere durch Text oder grafische Darstellungen.

8. Das Verfahren nach einem der vorhergehenden Ansprüche, wobei der Regelbaum mehrere Wurzeln hat, die nacheinander nach einer vorgegebenen Reihenfolge von den Blättern zu der Wurzel abgearbeitet werden, vorzugsweise auch parallel.

9. Computervorrichtung mit mindestens einer Verarbeitungseinheit und Speicherbereich, die so konfiguriert sind, dass ein Verfahren nach einem der Ansprüche 1 bis 8 durchgeführt werden kann.
